# EUROPEAN PATENT SPECIFICATION

(11) **EP 3 696 062 B1**
(45) Date of publication and mention of the grant of the patent: **13.09.2023**
(21) Application number: 19382112.1
(22) Date of filing: 18.02.2019
(51) Int. Cl.: B62H 5/00, B62J 9/00

(54) **LOCKING AND FASTENING DEVICE FOR A MOTORCYCLE CASE**
VERSCHLUSS- UND BEFESTIGUNGSVORRICHTUNG FÜR EINEN MOTORRADKOFFER
DISPOSITIF DE FERMETURE ET DE FIXATION POUR UN BOITIER DE MOTOCYCLETTE

(43) Date of publication of application: 19.08.2020
(73) Proprietor: NAD, S.L., 08100 Mollet del Vallès (ES)
(72) Inventor: AYALA GONZALEZ, Pedro, 08100 MOLLET DEL VALLÈS (ES)
(74) Representative: Ponti & Partners, S.L.P

(56) References cited:
- DE-A1- 3 716 445

## Description

This invention relates to a locking and fastening device for a motorcycle storage case of the type that allows the coupling and uncoupling of the storage case to the motorcycle, and also allows the opening and closing of a lid of said storage case.

### Background of the invention

Locking and fastening devices for motorcycle storage cases comprising a mechanism that allows the storage case to be coupled and uncoupled to the chassis of a motorcycle are known in the state of the art. Said devices also include a retaining element that allows a storage case lid to be opened and closed. These devices have the disadvantage that the user must use both hands to perform the action of uncoupling the storage case and opening the lid. In addition, these devices comprise a large number of components that increase the final cost of the storage case.

An example of the type of devices mentioned in the previous paragraph is that described in patent document US 5439149, wherein a locking and fastening device comprises a first handle mounted in such a way that when turning from a resting position to an active position, it actuates tabs that release the lid of the storage case. In addition, this device comprises a second handle that is mounted coaxially to the first, in such a way that when turning from a resting position to an active position it actuates a fastening element that allows the storage case to be coupled and uncoupled to the chassis of a motorcycle. This second handle comprises a notch to lock its actuation and that of the first handle when both are in a retracted position, one under the other.

The device described in US 5439149 has the disadvantage that to release the lid, both handles must be placed in an extended vertical position. In this extended vertical position, the storage case is uncoupled from the motorcycle chassis, providing little safety for the user.

Patent document DE 37 16 445 A discloses a locking and fastening device according to the preamble of claim 1, wherein the handle must be arranged in a most right position to open the lid. However, in this position, the storage case keeps also uncoupled from the motorcycle chassis.

It is therefore clear that it is necessary to obtain a storage case with a device that allows the user to operate the opening and closing of the storage case lid without having to release the storage case from the motorcycle chassis. In addition, said device must have a compact design and allow the user to carry out the actions in a simple way, avoiding the content stored inside the storage case being able to be easily stolen.

### Description of the invention

The object of the present invention is to provide a locking and fastening device for a motorcycle storage case that resolves the above-mentioned inconveniences and has the advantages described below.

According to this object, the present invention provides a storage case comprising a locking and fastening device for a motorcycle storage case according to claim 1.

In the present invention, the locking and fastening device includes a handle actuation mechanism that is operationally connected to the storage case fastening element in such a way that the handle can acquire an extended intermediate position wherein the storage case remains attached to the chassis of the motorcycle, or an extended final position for transporting to release the storage case from the chassis. In the extended intermediate position, the user can access the opening and closing mechanism of the lid without releasing the storage case from the chassis. In this way, the opening and closing mechanism of the lid can be actuated when the handle is in an extended intermediate position wherein the storage case remains attached to the motorcycle chassis, avoiding possible accidental uncoupling.

According to an embodiment, the handle actuation mechanism comprises an unlocking plunger arranged to cooperate with a handle retaining tab in order to release the handle body from the retaining tab when the plunger is actuated. In addition, the handle actuation mechanism includes at least one connecting rod operationally connected to the storage case's fastening element through a slide designed to guide the relative movement of the connecting rod and the handle relative to the storage case's fastening element to the extended intermediate position.

Thus, by actuating the unlocking plunger of the handle actuation mechanism, the retaining tab releases the handle, in such a way that it moves guided by a connecting rod to an extended intermediate position. The connecting rod slide allows the relative movement of the handle and connecting rod with respect to the fastening element in such a way that the storage case does not disengage from the motorcycle chassis.

The unlocking plunger of the handle actuation mechanism can be associated with a cylinder lock. The movement of the unlocking plunger is unlocked by means of a lock. When the user turns the key lock, the unlocking plunger is unlocked in such a way that it can be actuated to release the retaining tab.

Preferably, the handle actuation mechanism includes a first connecting rod operationally connected by one end to the handle and by the opposite end to a second connecting rod, the first connecting rod including the slide configured to guide the relative movement of the first connecting rod with respect to the second connecting rod until the handle reaches a predetermined position corresponding to the extended intermediate position.

In this way, the first connecting rod and second connecting rod are operationally connected in such a way that they connect the handle with the fastening element of the storage case. In addition, the slide on the first connecting rod allows the relative movement of the latter with respect to the second connecting rod, in such a way that the handle moves from a retracted position to an extended intermediate position without the second connecting rod being actuated.

Advantageously, the second connecting rod is operationally connected to the fastening element of the storage case, and the slide of the first connecting rod comprises a slotted hole configured to receive one end of the second connecting rod and allow the relative movement of said first connecting rod over the end of the second connecting rod until the handle reaches a predetermined position corresponding to the extended intermediate position.

Once again, the slotted hole in the slide defines a groove at the end of the first connecting rod, inside of which there is a protrusion at the end of the second connecting rod, said slotted hole defining a final stop for the protrusion of the second connecting rod that stops the relative movement of the first connecting rod.

According to an embodiment, the opening and closing mechanism of the storage case lid includes a lever operationally connected to the lid retaining element and arranged to interact with the body of the handle.

Advantageously, the lever comprises at least one locking element designed to be housed in a cavity in the body of the handle to allow the locking of the lid opening and closing mechanism when the handle is in a retracted position and the lever in a closing position of lid.

Thus, when the handle is in a retracted position and the opening and closing mechanism is in a closing position of the lid, the lever locking element is housed in a cavity in the handle body, in such a way that the opening and closing mechanism is not actuated.

Preferably, the lever of the opening and closing mechanism of the lid is mounted articulated to rotate relative to a coaxial shaft of the handle.

By mounting the lever on a coaxial shaft of the handle, the number of device components is reduced while providing a more compact design.

According to an embodiment, the means of locking the closing and opening mechanism of the lid when the handle is in the retracted position comprises at least the surface of the first connecting rod of the handle actuating mechanism intended to contact the lever of the opening and closing mechanism.

In this way, the opening and closing mechanism of the lid is blocked by the first connecting rod of the handle actuation mechanism when making contact with the lever in such a way that it cannot be moved.

According to an embodiment, the handle actuation mechanism comprises a spring arranged coaxially to the shaft of rotation of the handle, wherein the spring has accumulated potential energy to position the handle from the retracted position to the extended intermediate position when the handle is released by the retaining tab.

In this way, the handle automatically moves to an extended intermediate position when released by the retaining tab in such a way that the opening and closing mechanism of the lid is released.

Optionally, the lever of the lid opening and closing mechanism comprises a spring capable of accumulating potential energy when moving the lever from a lid closing position to an opening position where the lid retaining element releases the lid from the storage case body.

Optionally, the opening and closing mechanism, the handle, the handle actuation mechanism, and the locking means are mounted on a support base that can be housed in a cavity integrated in a storage case body.

In this way, the device is mounted compactly on a support base in such a way that it can be integrated into the storage case and does not protrude from the storage case body.

According to an embodiment, the handle is operationally connected to a fastening element that secures the storage case to an "L" shaped side support of the motorcycle chassis. In this embodiment, the storage case that includes the device incorporates a U-shaped clamp arranged on one side of the storage case body, which is capable of being coupled laterally with the ability to turn and lateral pivot in a sensitively vertical section of a lateral support fixed to the chassis of the motorcycle. On the same side of the storage case body are two support bodies arranged to be coupled on a significantly horizontal section of the same support, after the turning and lateral pivoting of the storage case. The position of the three support points described above is fixed to the side support of the chassis by means of the fastening element that is operationally connected to the handle.

The lateral fastening system described in the previous paragraph is the subject of European patent EP3121097B1, issued by the same owner of the present application.

In the present invention, the fastening element of the storage case is capable of being coupled to a support configured to adapt to a lateral fixing system such as that described in the aforementioned patent, or of being coupled to a different fixing system, which allows, for example, the fixing of the storage case on a support arranged horizontally on the rear of the motorcycle.

### Brief description of the drawings

In order to better understand the description made, a set of drawings has been provided which, schematically and solely by way of non-limiting example, represents a practical embodiment of the locking and fastening device for a motorcycle storage case.

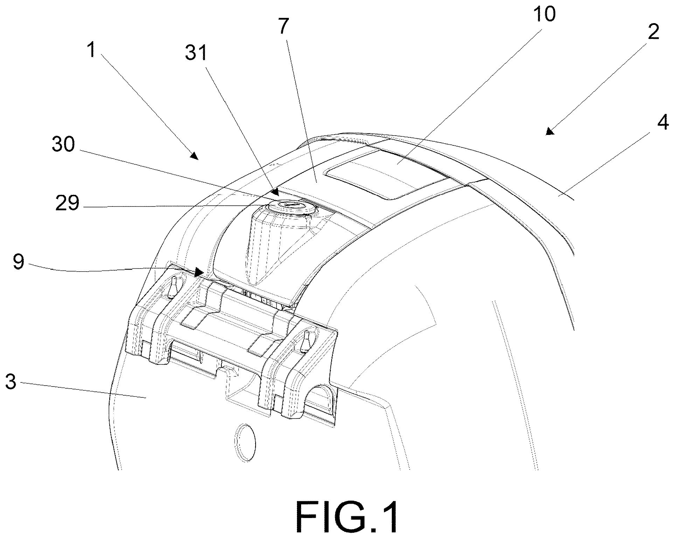

Figure 1 is a perspective view of an embodiment of the device mounted in a storage case body cavity, when the handle is in a retracted position locking the opening and closing mechanism of the lid, and wherein the storage case is attached to the chassis of the motorcycle

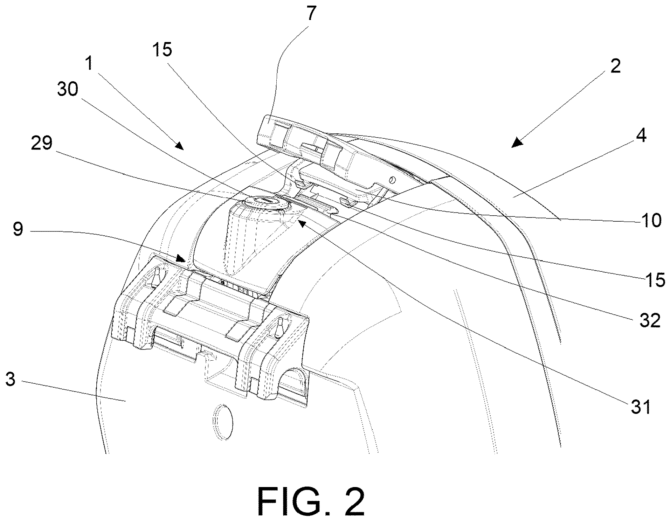

Figure 2 is a perspective view of the same embodiment as Figure 1, wherein the device is mounted in a cavity of a storage case body, when the articulated handle is in an extended intermediate position in such a way that the storage case is attached to the motorcycle chassis, and wherein the opening and closing mechanism of the lid is released.

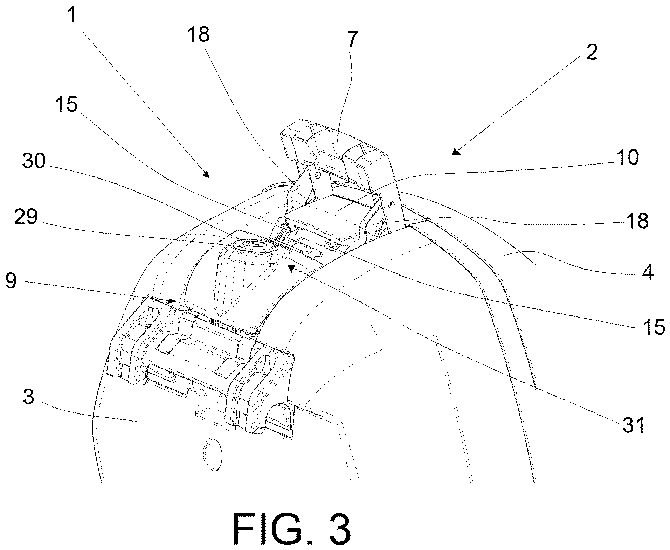

Figure 3 is a perspective view of the same embodiment as Figure 1, wherein the device is mounted in a cavity of a storage case body, when the articulated handle is in an extended final position for transporting in such a way that said storage case is uncoupled from the motorcycle chassis, and wherein the mechanism for opening and closing the lid is released.

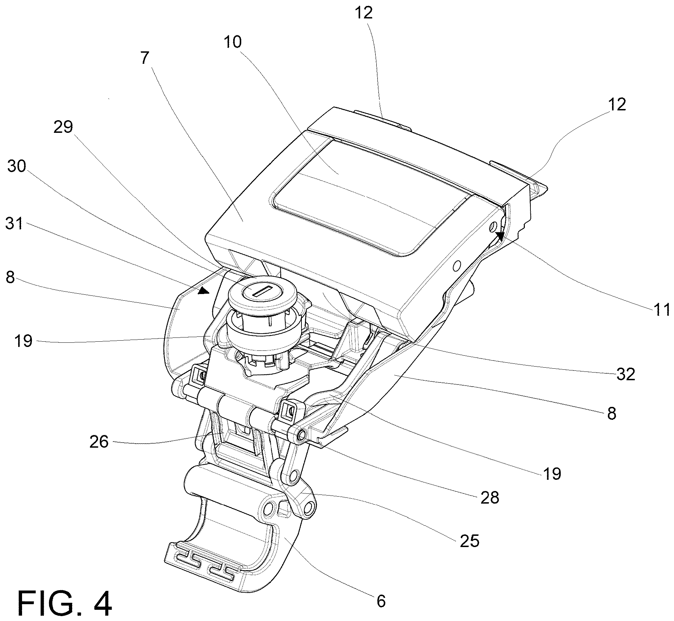

Figure 4 is a detailed view of the same embodiment as Figure 1, wherein the retaining tab of the handle actuation mechanism is in a locking position to jointly lock the handle and the lid opening and closing mechanism when the handle is in a retracted position and the lid opening and closing mechanism in a lid closing position. The fastening element is in a position wherein it attaches the storage case to the motorcycle chassis. For reasons of clarity, no part of the casing surrounding the lock of the locking mechanism is shown.

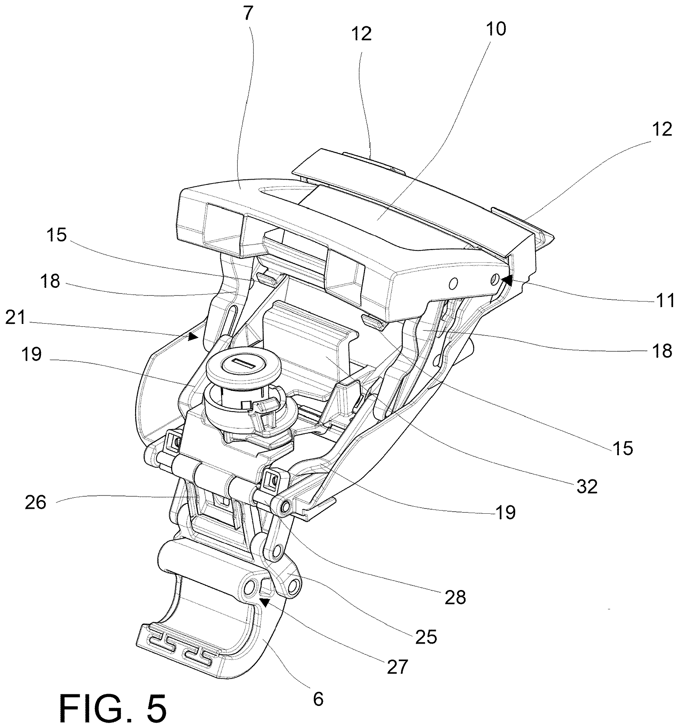

Figure 5 is a detailed view of the same embodiment as Figure 1, wherein the handle has been actuated by the retaining tab of the handle actuation mechanism, moving it to an extended intermediate position wherein the lid opening and closing mechanism is released. The fastening element is in a position where it attaches the storage case to the motorcycle chassis. For reasons of clarity, no part of the casing surrounding the lock of the locking mechanism is shown.

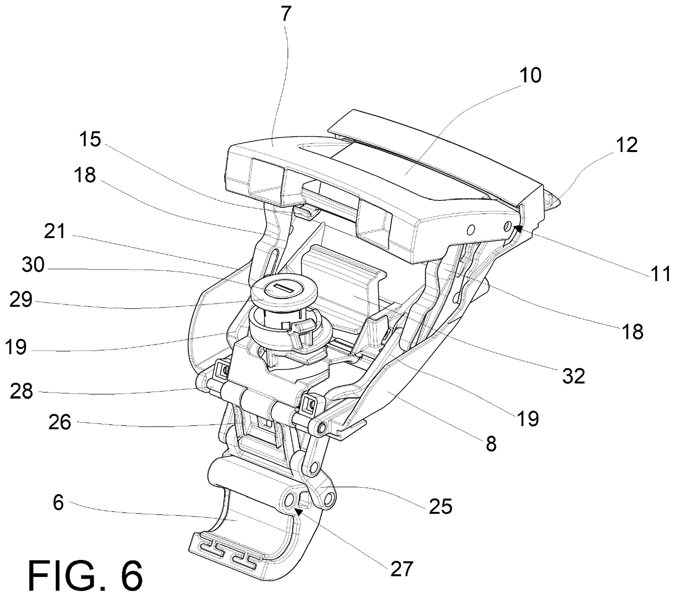

Figure 6 is a detailed view of the same embodiment as Figure 1, wherein the handle is in an extended intermediate position and the opening and closing mechanism of the lid is in an opening position to release the lid from the storage case. The fastening element is in a position where the storage case is fastened to the chassis of the motorcycle. For reasons of clarity, no part of the casing surrounding the lock of the locking mechanism is shown.

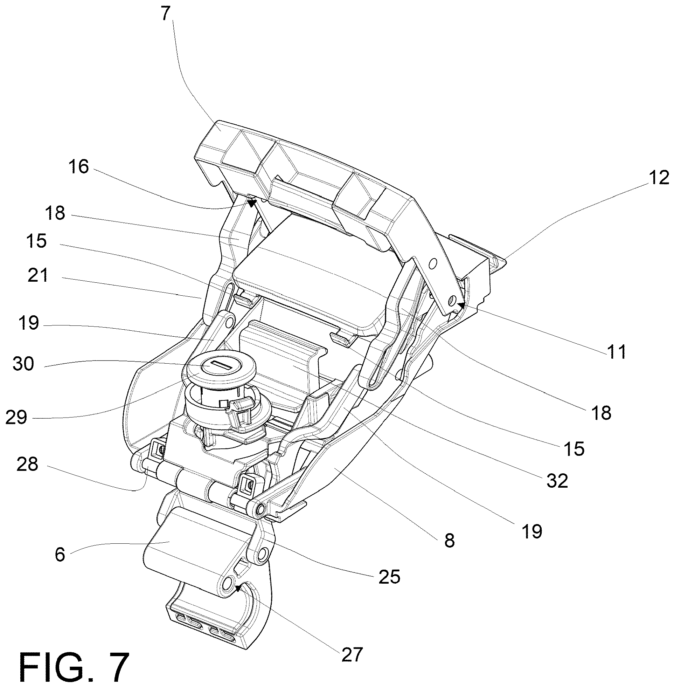

Figure 7 is a detailed view of the same embodiment as Figure 1, wherein the handle is in an extended final position actuating the storage case's fastening element to release the storage case from the motorcycle's chassis, and wherein the lid opening and closing mechanism is in a lid closing position. For reasons of clarity, no part of the casing surrounding the lock of the locking mechanism is shown.

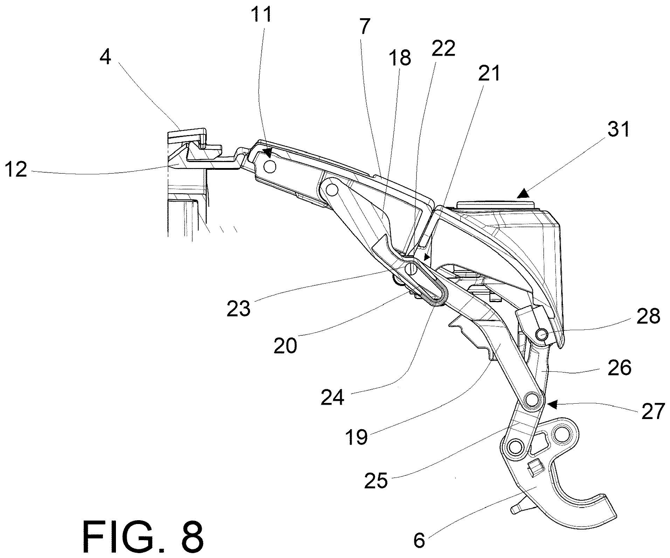

Figure 8 is a sectioned view of the side elevation for the same embodiment as Figure 1, wherein the handle and the lid opening and closing mechanism are in a lid closing position, wherein the handle actuation mechanism is arranged in such a way as to lock the lid opening and closing mechanism, and wherein the storage case fastening element holds the storage case to the motorcycle chassis. For reasons of clarity, no part of the body of the storage case is shown.

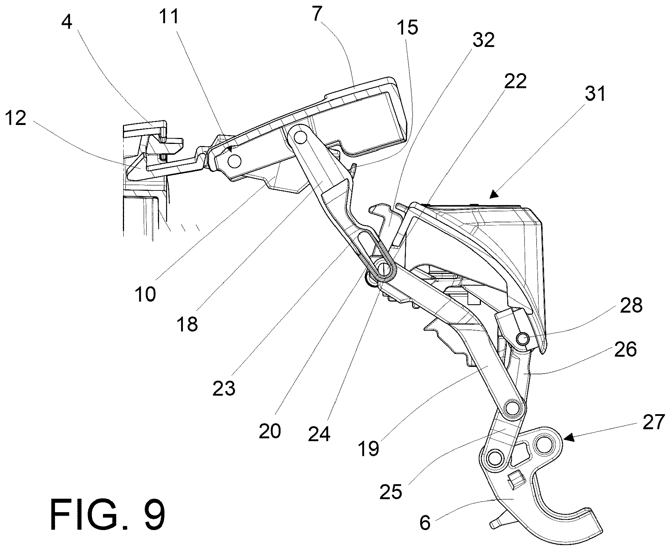

Figure 9 is a sectioned view of the side elevation for the same embodiment as Figure 1, wherein the handle is in an extended intermediate position once the handle actuation mechanism has been actuated, wherein the opening and closing mechanism is in an opening position to release the lid, and wherein the storage case's fastening element couples the storage case to the motorcycle's chassis. For reasons of clarity, no part of the body of the storage case is shown.

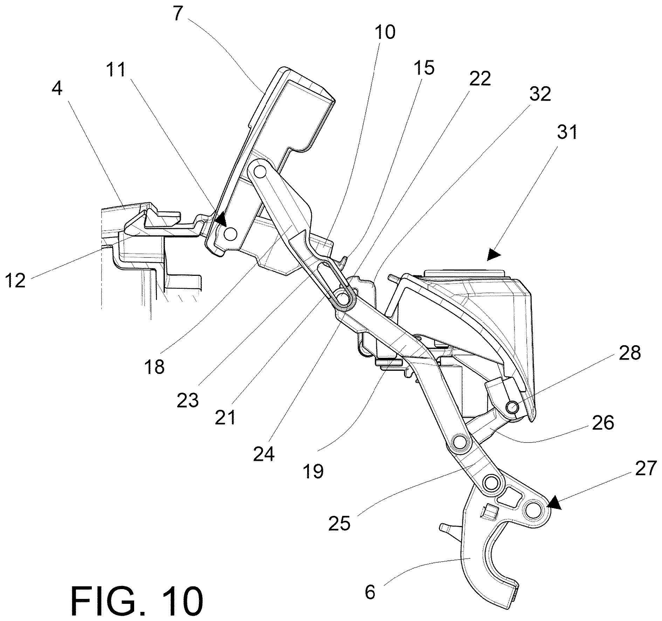

Figure 10 is a sectioned view of the side elevation for the same embodiment as Figure 1, wherein the handle is in an extended final position for transporting in such a way that the actuation mechanism moves the fastening element to release the storage case from the motorcycle chassis, and wherein the opening and closing mechanism is in a lid closing position. For reasons of clarity, no part of the body of the storage case is shown.

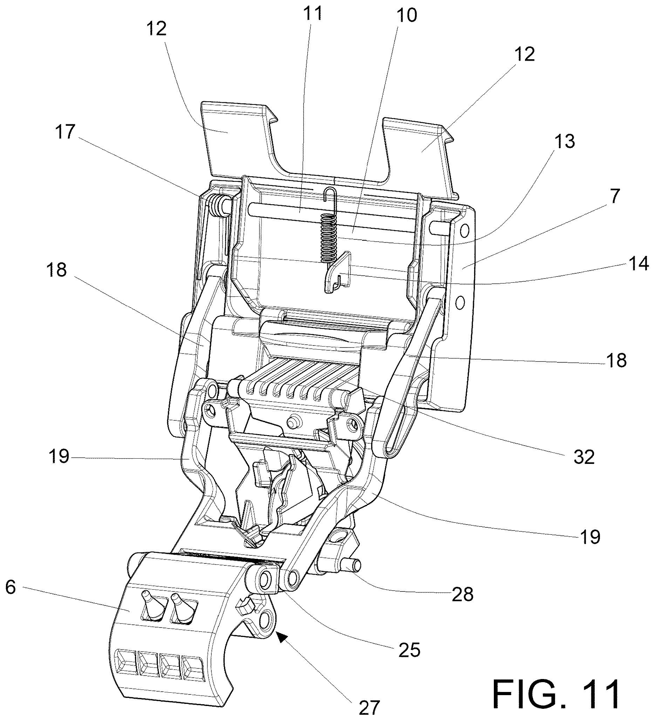

Figure 11 is a detailed rear view for the same embodiment as Figure 1, wherein the retaining tab of the handle actuation mechanism is in a locking position, to jointly lock the handle and the lid opening and closing mechanism when the handle actuation mechanism is in a retracted position and the lid opening and closing mechanism is in a lid closing position. The fastening element is in a position wherein it attaches the storage case to the motorcycle chassis. For reasons of clarity, the support base is not shown.

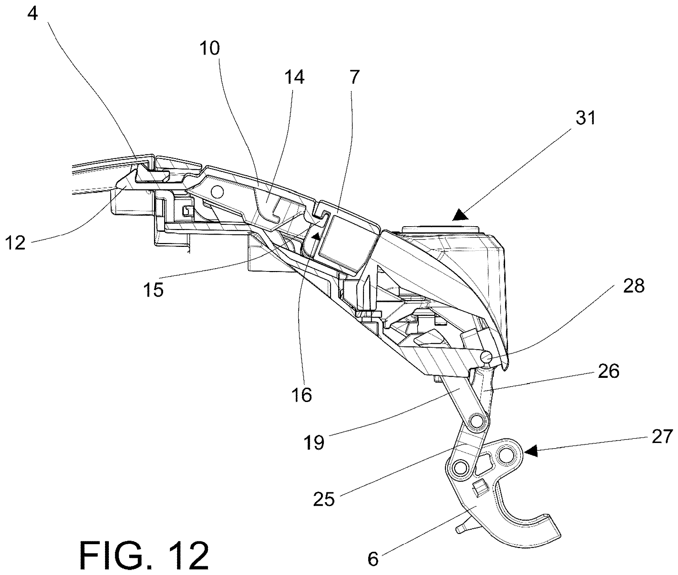

Figure 12 is a sectioned view of the side elevation for the same embodiment as Figure 1, wherein a lever locking element is housed in a handle cavity when the handle actuation mechanism is in a retracted position and the lid opening and closing mechanism is in a lid closing position. In addition, the handle actuation mechanism is arranged in such a way that it locks the opening and closing mechanism of the lid, and wherein the storage case's fastening element holds the storage case to the motorcycle's chassis. For reasons of clarity, no part of the body of the storage case is shown.

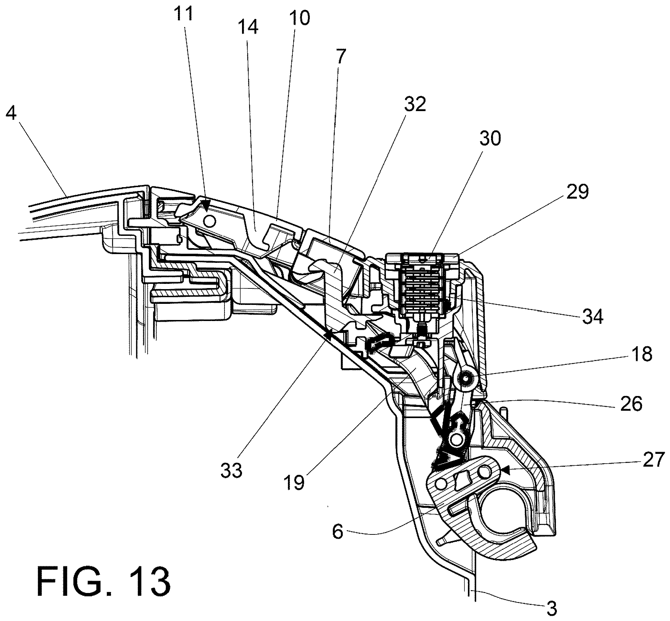

Figure 13 is a sectioned view of the side elevation for the same embodiment as Figure 1, wherein the tab locks the handle in a retracted position and the opening and closing mechanism is in a lid closing position, and wherein the storage case's fastening element attaches the storage case to the motorcycle's chassis. For reasons of clarity, no part of the body of the storage case is shown.

### Description of a preferred embodiment

A preferred embodiment of the device 1 of the present invention is described below with reference to Figures 1 to 13. This embodiment of the device 1 is particularly suitable for motorcycle storage cases 2 comprising a storage case body 3 as a container and a lid 4 articulated to the storage case body 3, and wherein these storage cases 2 can be coupled and uncoupled to the chassis of a motorcycle.

In the embodiment described, the closing and fastening device 1 comprises a mechanism for opening and closing the lid 4, an element 6 for fastening the storage case 2 to the chassis of the motorcycle, a handle 7, a mechanism for actuating the handle 7 that allows actuating the fastening element 6 of the storage case 2, and means for locking the operation of the opening and closing mechanism of the lid 4. All components are mounted on a support base 8 in such a way that it can be housed in a cavity 9 of the storage case 2 body 3 to be integrated into it.

The opening and closing mechanism of the lid 4 includes a rectangular lever 10 articulated with the possibility of turning on one of its long sides to a shaft 11. As can be seen in Figure 11, the handle 7 is also mounted on the shaft 11, in such a way that the lever 10 and the handle 7 are articulated so that they rotate coaxially. The lever 10 comprises two retention elements 12, mounted on one of the long sides of the lever 10 in such a way that they can contact the lid 4 to secure it.

In addition, the lever 10 includes a spring 13 mounted on a protrusion 14 from the lower surface of the lever 10 and attached to the support base 8. This spring 13 accumulates potential energy when the lever 10 is moved from the closing position of the lid 4 to the opening position of the lid 4, in such a way that once the lid 4 of the storage case 2 has been uncoupled, the lever 10 moves to the closing position of the lid 4 without the need for the user to move it (see Figure 11).

The lever 10 also has on one of its long sides locking elements 15 mounted in such a way that they protrude from the lever 10 and arranged in such a way that when the handle 7 is in a retracted position, these locking elements 15 are overlapped by the handle 7 and housed inside a cavity 16 of it (see Figures 5 to 7).

In the embodiment described above, handle 7 is "U" shaped, so it surrounds three of the four sides of lever 10 and allows it to be snapped around the lever 10 when both the handle 7 is in a retracted position and the lever 10 is in a closed position. In addition, the "U" shape of the handle 7 allows the user to grasp the storage case 2 in such a way that it can be transported once uncoupled from the motorcycle chassis.

The handle 7 is mounted on a shaft 11, in such a way that the lever 10 and the handle 7 are articulated so that they rotate coaxially (see Figure 11). In addition, the handle 7 has two cavities 16, specifically on its lower surface, which allow the locking elements 15 to be housed when the handle 7 and the lever 10 are in a retracted position. These cavities 16 and the locking elements 15 interact to prevent the opening mechanism from being actuated when the handle 7 is in a retracted position (see Figure 7).

The handle 7 has a spring 17 mounted coaxially to the shaft 11. This spring 17 has accumulated potential energy, so it allows the handle 7 to be moved automatically from a retracted position to an extended intermediate position. In addition, this spring 17 accumulates potential energy when moving from an extended intermediate position to an extended final position for transporting, in such a way that the handle 7 can be moved automatically to the extended final position for transporting without the user having to move it (see Figure 11).

As shown in Figures 1, 4 and 8, when the handle 7 is in a retracted position and the lever 10 is in the closing position of the lid, both are defined on the same surface in such a way that they do not protrude from the body 3 of the storage case.

The operating mechanism of the handle 7 comprises two first connecting rods 18, each articulated at one end to a midpoint on the short side of the handle 7, and at the opposite end to a second connecting rod 19. The first connecting rods 18 are designed in such a way that when the opening and closing mechanism of the lid 4 is in a closing position and the handle 7 in a retracted position wherein they contact the lever 10 to lock it so as it does not move (see Figures 8 to 10).

The union between the first connecting rods 18 and the second connecting rods 19 is carried out by means of a slide 20 with a slotted hole 21 arranged at the opposite end of the first connecting rod 18, and a protrusion 22 arranged at one end of the second connecting rod 19 which is housed inside the slide 20 with the slotted hole 21. This slide 20 defines a sliding movement wherein the first connecting rod 18 can move relative to the second connecting rod 19 from an initial 23, wherein the handle 7 is in a retracted position, to a final stop 24, wherein the handle 7 is in an intermediate extended position. The second rod 19 moves when the first connecting rod 18 is actuated, once the protrusion 22 of the second rod 19 is in contact with the final stop 24 of the slide 20. Thus, when the user operates the handle 7 from an extended intermediate position to an extended final position for transporting, the first connecting rod 18 actuates the movement of the second connecting rod 19 in order to uncouple the fastening element 6 from the storage case (see Figures 8 to 10).

The second connecting rod 19 is connected to the fastening element 6 of the storage case 2 by means of movement transmission elements 25, 26, which are articulated with the possibility of rotation. Thus, when the handle 7 moves from an extended intermediate position to an extended final position for transporting, the movement transmission elements 25, 26 move the fastening element 6 by turning with respect to a shaft 27 to release the storage case 2 from the motorcycle chassis (see Figures 8 to 10).

The fastening element 6 of the storage case 2 is mounted at the opposite end of the transmission element 25 and on a shaft 27, in such a way that when moving the transmission element 25, the fastening element 6 pivots with respect to the shaft 27. In the embodiment described above, the fastening element 6 is shaped like a hook in such a way that it can surround a portion of the motorcycle chassis to fasten the storage case 2 (see Figures 4 to 10).

The operating mechanism of the handle 7 further comprises an unlocking plunger 29 in combination with a cylinder lock 30 of a lock 31. The movement of the unlocking plunger 29 is unlocked by means of a lock 31. When the user turns the key of the lock 31, the unlocking plunger 29 is unlocked in such a way that it can be actuated to release the retaining tab 32.

The retaining tab 32 is mounted articulated to a portion of the handle actuation mechanism 7 in such a way that in a resting position, it contacts a portion of the handle 7 blocking its movement. However, when actuated by the unlocking plunger 29, the retaining tab 32 moves by turning with respect to the shaft 33 to release the handle 7 (see Figures 8 to 10).

The lock 31 of the actuation mechanism handle 7 has a groove wherein a key can be inserted to move the cylinder lock 30 to a predetermined position by turning it to allow a longitudinal movement of said cylinder lock 30. In addition, the lock 31 has a spring 34 that can be compressed by actuating the cylinder lock 30 and that allows said cylinder lock 30 to be moved to an initial position once the force that compresses it is no longer exerted (see Figures 12).

The function of locking and securing the device 1 is described below.

Figure 1 shows the device 1 with a handle 7 in a retracted position and the opening and closing mechanism of the lid 4 in a closing position of the lid 4.

To release the lid 4, the user first inserts a key into the lock 31 and turns the cylinder lock 30 to a position where it is released in such a way that it can be moved longitudinally next to the unlocking plunger 29. The user then presses the cylinder lock 30 by moving it longitudinally next to the unlocking plunger 29 until the unlocking plunger 29 contacts the retaining tab 32 to release the handle 7 (see Figure 2). The cylinder 30 and unlocking plunger 29 set automatically return to their original position thanks to the decompression of the spring 34, without the need for the user to move it (see Figure 12).

Once the handle 7 is released from the retaining tab 32, it automatically moves by means of the spring 17 arranged on the shaft 11, to an extended intermediate position without the user's intervention (see Figure 9).

In this extended intermediate position of the handle 7, the opening and closing mechanism of the lid 4 is released in such a way that the lever 10 can be operated by the user without the storage case being released from the motorcycle chassis. The user then actuates the lever 10 by turning it with respect to the shaft 11 to open the lid 4 and allow the user access to the interior of the storage case 2 (see Figure 9).

To release the storage case from the motorcycle chassis, the user rotates the handle 7 by moving it from an extended intermediate position to an extended final position for transporting, in such a way that the first connecting rod 18 actuates the second connecting rod 19 of the handle 7 actuation mechanism. When moving the second connecting rod 19, the transmission element 26 pivots with respect to a shaft 28 and the transmission element 25 actuates the fastening element 6 of the storage case 2 to release the storage case 2 from the motorcycle chassis.

To fasten the storage case 2 to the motorcycle chassis once it has been released, the user positions the storage case 2 in the immediate vicinity of the portion of the chassis to which it is to be fastened. The user then actuates the handle 7 by moving it to an extended final position for transporting in such a way that a portion of the chassis is placed in contact with the fastening element 6. The handle 7 then moves from an extended final position for transporting to an intermediate position in such a way that the fastening element 6 surrounds the chassis portion of the motorcycle by fastening the storage case 2 (see Figure 9).

Although reference has been made to a specific embodiment of the invention, it is clear to a person skilled in the art that the locking and fastening device for a motorcycle storage case described is subject to numerous variations and modifications, and that all the details mentioned may be replaced by others technically equivalent, without departing from the scope of protection defined by the attached claims. For example, although an embodiment has been described wherein a cylinder lock in a keyed lock actuates the unlocking plunger, similar results of the invention could be obtained by using, for example, an electronic or digital lock. For example, although an embodiment has been described in which the union between the first connecting rod 18 and the second connecting rod 19 is made by means of a slotted hole having a groove with an initial stop and a final stop, similar results of the invention could be obtained by using, for example, a pneumatic cylinder.

## Claims

1. Storage case comprising a locking and fastening device (1) for a motorcycle case (2), comprising a mechanism for opening and closing the lid (4) of the storage case (2), a handle (7) articulated in such a way that it can be rotated from a retracted position to an extended final position for transporting the storage case (2), said handle (7) being operationally connected to at least one fastening element (6) arranged to fasten the storage case (2) to the motorcycle chassis in a removable manner when the handle (7) is in a retracted position, the storage case (2) susceptible to being released from the motorcycle when the handle (7) is actuated to the extended final position for transporting, said device (1) comprising means for locking the opening and closing lid (4) mechanism by means of the handle (7) when said handle (7) is in the retracted position, **characterised in that** it comprises a handle actuation mechanism (7) operationally connected to the fastening element (6) and configured to provide an extended intermediate position of the handle (7) capable of releasing the actuation of the opening and closing lid (4) mechanism while the fastening element (6) of the storage case (2) remains coupled to the motorcycle chassis.

2. Storage case according to claim 1, wherein said handle actuation mechanism (7) comprises an unlocking plunger (29) arranged to cooperate with a handle (7) retaining tab (32) in order to release the handle (7) body from the retaining tab (32) when the plunger (29) is actuated, said mechanism including at least one connecting rod (18, 19) operationally connected to the storage case fastening element (6) through a slide (20) intended to guide the relative movement of the connecting rod (18, 19) and the handle (7) with respect to said fastening element (6) of the storage case (2) to an extended intermediate position.

3. Storage case according to claim 2, wherein said handle actuation mechanism includes a first connecting rod (18) operationally connected by one end to the handle (7) and by the opposite end to a second connecting rod (19), including the first connecting rod (18) the slide (20) configured to guide the relative movement of said first connecting rod (18) with respect to the second connecting rod (19) until the handle (7) reaches a predetermined position corresponding to said extended intermediate position.

4. Storage case according to claim 3, wherein the second connecting rod (19) is operationally connected to the attachment element (6) of the storage case, and wherein the slide (20) of the first connecting rod (18) comprises a slotted hole (21) configured to receive one end of the second connecting rod (19) and allow the relative movement of said first connecting rod (18) over the end of the second connecting rod (19) until the handle (7) reaches a predetermined position corresponding to said extended intermediate position.

5. Storage case according to claim 4, wherein the slotted hole (21) of the slide (20) defines a groove in the end of the first connecting rod (18) in the interior of which there is a protrusion (22) foreseen in the end of the second connecting rod (19), said slotted hole defining a final stop (24) for the protrusion (22) of the second connecting rod (19) that stops the relative movement of the first connecting rod (18).

6. Storage case according to claim 1, wherein the opening and closing mechanism of the lid (4) of the storage case (2) includes a lever (10) operationally connected to a lid (4) retaining element (12) and arranged to interact with the handle (7).

7. Storage case according to claim 6, wherein said lever (10) comprises at least one locking element (15) intended to be housed in a cavity (16) of the handle (7), to allow the locking of the opening and closing mechanism of the lid (4) when said handle (7) is in a retracted position and said lever (10) in a closing position of the lid (4).

8. Storage case according to claims 6 or 7, wherein the lever (10) of the opening and closing mechanism of the lid (4) is mounted articulated to rotate with respect to a coaxial shaft (11) of the handle.

9. Storage case according to claim 2, wherein said means of locking the actuation of the closing and opening mechanism of the lid (4) comprise at least one connecting rod (18, 19) of the handle actuation mechanism (7) intended to contact the lever (10) of the opening and closing mechanism.

10. Storage case according to claim 2, wherein said unlocking plunger (29) is mounted in a lock to prevent its actuation when the user locks the lock with a key.

11. Storage case according to claim 2, in which said handle (7) comprises a spring (17) arranged coaxially to the shaft (11) of rotation of the handle (7), wherein said spring (17) has accumulated potential energy to move said handle (7) from the retracted position to the extended intermediate position when the handle (7) is released by the retaining tab (32) of the handle actuation mechanism (7).

12. Storage case according to claim 1, wherein the opening and closing mechanism of the lid (4), the fastening element (6) of the storage case (2) to the chassis of the motorcycle, the handle (7), the actuating mechanism of the handle (7) that allows the fastening element (6) of the storage case (2) to be actuated, and the means of locking the opening and closing mechanism of the lid (4) are mounted on a support base (8) integrated in a cavity (9) of the storage case (2).

## Patentansprüche

1. Aufbewahrungsbehälter aufweisend eine Verriegelung- und Befestigungsvorrichtung (1) für einen Motorradbehälter (2), umfassend einen Mechanismus zum Öffnen und Schließen des Deckels (4) des Aufbewahrungsbehälters (2), einen Griff (7), der so angelenkt ist, dass er aus einer eingezogenen Position in eine herausgezogene Endposition zum Transportieren des Aufbewahrungsbehälters (2) gedreht werden kann, wobei der Griff (7) mit wenigstens einem Befestigungselement (6) betriebstechnisch verbunden ist, das angeordnet ist, um den Aufbewahrungsbehälter (2) an einem Motorradrahmen auf abnehmbare Weise zu befestigen, wenn der Griff (7) in einer eingezogenen Position ist, wobei der Aufbewahrungsbehälter (2) von dem Motorrad gelöst werden kann, wenn der Griff (7) in die herausgezogene Endposition zum Transportieren betätigt wird, wobei die Vorrichtung (1) Mittel umfasst, um den Mechanismus zum Öffnen und Schließen des Deckels (4) mittels des Griffs (7) zu verriegeln, wenn der Griff (7) in der eingezogenen Position ist, **dadurch gekennzeichnet, dass** er einen Griffbetätigungsmechanismus (7) umfasst, der mit dem Befestigungselement (6) betriebstechnisch verbunden ist und konfiguriert ist, um eine herausgezogene Zwischenposition des Griffs (7) bereitzustellen, die geeignet ist, die Betätigung des Mechanismus zum Öffnen und Schließen des Deckels (4) freizugeben, während das Befestigungselement (6) des Aufbewahrungsbehälters (2) mit dem Motorradrahmen gekoppelt bleibt.

2. Aufbewahrungsbehälter nach Anspruch 1, wobei der Griffbetätigungsmechanismus (7) einen Entriegelungsbolzen (29) umfasst, der angeordnet ist, um mit einer Griff (7)-Haltelasche (32) zusammenzuwirken, um den Körper des Griffs (7) von der Haltelasche (32) freizugeben, wenn der Bolzen (29) betätigt wird, wobei der Mechanismus wenigstens eine Verbindungsstange (18, 19) enthält, die mit dem Aufbewahrungsbehälter-Befestigungselement (6) über einen Gleiter (20) betriebstechnisch verbunden ist, der bestimmt ist, um die relative Bewegung der Verbindungsstange (18, 19) und des Griffs (7) in Bezug auf das Befestigungselement (6) des Aufbewahrungsbehälters (2) in eine herausgezogene Zwischenposition zu führen.

3. Aufbewahrungsbehälter nach Anspruch 2, wobei der Griffbetätigungsmechanismus eine erste Verbindungsstange (18) aufweist, die an einem Ende mit dem Griff (7) und an dem gegenüberliegenden Ende mit einer zweiten Verbindungsstange (19) betriebstechnisch verbunden ist, wobei die erste Verbindungsstange (18) den Gleiter (20) aufweist, der konfiguriert ist, um die relative Bewegung der ersten Verbindungsstange (18) in Bezug auf die zweite Verbindungsstange (19) zu führen, bis der Griff (7) eine vorbestimmte Position erreicht, die der herausgezogenen Zwischenposition entspricht.

4. Aufbewahrungsbehälter nach Anspruch 3, wobei die zweite Verbindungsstange (19) mit dem Befestigungselement (6) des Aufbewahrungsbehälters betriebstechnisch verbunden ist und wobei der Gleiter (20) der ersten Verbindungsstange (18) ein Schlitzloch (21) aufweist, das konfiguriert ist, um ein Ende der zweiten Verbindungsstange (19) aufzunehmen und um die relative Bewegung der ersten Verbindungsstange (18) über das Ende der zweiten Verbindungsstange (19) hinaus zuzulassen, bis der Griff (7) eine vorbestimmte Position erreicht, die der herausgezogenen Zwischenposition entspricht.

5. Aufbewahrungsbehälter nach Anspruch 4, wobei das Schlitzloch (21) des Gleiters (20) eine Nut im Ende der ersten Verbindungsstange (18) definiert, in deren Innerem sich ein Vorsprung (22) befindet, der am Ende der zweiten Verbindungsstange (19) vorgesehen ist, wobei das Schlitzloch einem Endanschlag (24) für den Vorsprung (22) der zweiten Verbindungsstange (19) definiert, der die relative Bewegung der ersten Verbindungsstange (18) anhält.

6. Aufbewahrungsbehälter nach Anspruch 1, wobei der Öffnungs- und Schließmechanismus des Deckels (4) des Aufbewahrungsbehälters (2) einen Hebel (10) aufweist, der mit einem Deckel (4)-Halteelement (12) betriebstechnisch verbunden ist und angeordnet ist, um mit dem Griff (7) zusammenzuwirken.

7. Aufbewahrungsbehälter nach Anspruch 6, wobei der Hebel (10) wenigstens ein Verriegelungselement (15) aufweist, das bestimmt ist, um in einem Hohlraum (16) des Griffs (7) aufgenommen zu werden, um das Verriegeln des Öffnungs- und Schließmechanismus des Deckels (4) zu erlauben, wenn der Griff (7) in einer eingezogenen Position ist und der Hebel (10) in einer Schließposition des Deckels (4) ist.

8. Aufbewahrungsbehälter nach Anspruch 6 oder 7, wobei der Hebel (10) des Öffnungs- und Schließmechanismus des Deckels (4) gelenkig montiert ist, um sich in Bezug auf eine koaxiale Welle (11) des Griffs zu drehen.

9. Aufbewahrungsbehälter nach Anspruch 2, wobei die Mittel zum Verriegeln der Betätigung des Öffnungs- und Schließmechanismus des Deckels (4) wenigstens eine Verbindungsstange (18, 19) des Griffbetätigungsmechanismus (7) umfassen, die bestimmt ist, um mit dem Hebel (10) des Öffnungs- und Schließmechanismus in Kontakt zu gelangen.

10. Aufbewahrungsbehälter nach Anspruch 2, wobei der Entriegelungsbolzen (29) in einem Schloss montiert ist, um seine Betätigung zu verhindern, wenn der Benutzer das Schloss mit einem Schlüssel verriegelt.

11. Aufbewahrungsbehälter nach Anspruch 2, wobei der Griff (7) eine Feder (17) aufweist, die koaxial zu der Drehwelle (11) des Griffs (7) angeordnet ist, wobei die Feder (17) potentielle Energie akkumuliert, um den Griff (7) aus der eingezogenen Position in die herausgezogene Zwischenposition zu bewegen, wenn der Griff (7) durch die Haltelasche (32) des Griffbetätigungsmechanismus (7) freigegeben ist.

12. Aufbewahrungsbehälter nach Anspruch 1, wobei der Öffnungs- und Schließmechanismus des Deckels (4), das Befestigungselement (6) des Aufbewahrungsbehälters (2) am Rahmen des Motorrads, der Griff (7), der Betätigungsmechanismus des Griffs (7), der die Betätigung des Befestigungselements (6) zulässt, und die Mittel zum Verriegeln des Öffnungs- und Schließmechanismus des Deckels (4) an einer Tragbasis (8), die in einen Hohlraum (9) des Aufbewahrungsbehälters (2) integriert ist, montiert sind.

## Revendications

1. Mallette de stockage comprenant un dispositif de verrouillage et de fixation (1) pour une mallette de motocyclette (2), comprenant un mécanisme pour ouvrir et fermer le couvercle (4) de la mallette de stockage (2), une poignée (7) articulée de sorte qu'elle peut tourner d'une position rétractée à une position finale étendue pour transporter la mallette de stockage (2), ladite poignée (7) étant raccordée, de manière opérationnelle, à au moins un élément de fixation (6) agencé pour fixer la mallette de stockage (2) au châssis de motocyclette d'une manière amovible lorsque la poignée (7) est dans une position rétractée, la mallette de stockage (2) étant susceptible d'être libérée de la motocyclette lorsque la poignée (7) est actionnée dans la position finale étendue pour le transport, ledit dispositif (1) comprenant des moyens pour verrouiller le mécanisme d'ouverture et de fermeture du couvercle (4) au moyen de la poignée (7) lorsque ladite poignée (7) est dans la position rétractée, **caractérisée en ce qu'**elle comprend un mécanisme d'actionnement de poignée (7) raccordé, de manière opérationnelle, à l'élément de fixation (6) et configuré pour fournir une position intermédiaire étendue de la poignée (7) pouvant libérer l'actionnement du mécanisme d'ouverture et de fermeture du couvercle (4) alors que l'élément de fixation (6) de la mallette de stockage (2) reste couplé au châssis de motocyclette.

2. Mallette de stockage selon la revendication 1, dans laquelle ledit mécanisme d'actionnement de poignée (7) comprend un piston de déverrouillage (29) agencé pour coopérer avec une languette de retenue (32) de poignée (7) afin de libérer le corps de poignée (7) de la languette de retenue (32) lorsque le piston (29) est actionné, ledit mécanisme comprenant au moins une tige de raccordement (18, 19) raccordée, de manière opérationnelle, à l'élément de fixation (6) de la mallette de stockage par le biais d'une glissière (20) prévue pour guider le mouvement relatif de la tige de raccordement (18, 19) et de la poignée (7) par rapport audit élément de fixation (6) de la mallette de stockage (2) dans une position intermédiaire étendue.

3. Mallette de stockage selon la revendication 2, dans laquelle ledit mécanisme d'actionnement de poignée comprend une première tige de raccordement (18) raccordée, de manière opérationnelle, par une extrémité, à la poignée (7) et par l'extrémité opposée, à une seconde tige de raccordement (19), comprenant la première tige de raccordement (18), la glissière (20) étant configurée pour guider le mouvement relatif de ladite première tige de raccordement (18) par rapport à la seconde tige de raccordement (19) jusqu'à ce que la poignée (7) atteigne une position prédéterminée correspondant à ladite position intermédiaire étendue.

4. Mallette de stockage selon la revendication 3, dans laquelle la seconde tige de raccordement (19) est raccordée, de manière opérationnelle, à l'élément de fixation (6) de la mallette de stockage, et dans laquelle la glissière (20) de la première tige de raccordement (18) comprend un trou fendu (21) configuré pour recevoir une extrémité de la seconde tige de raccordement (19) et permettre le mouvement relatif de ladite première tige de raccordement (18) sur l'extrémité de la seconde tige de raccordement (19) jusqu'à ce que la poignée (7) atteigne une position prédéterminée correspondant à ladite position intermédiaire étendue.

5. Mallette de stockage selon la revendication 4, dans laquelle le trou fendu (21) de la glissière (20) définit une rainure dans l'extrémité de la première tige de raccordement (18) à l'intérieur de laquelle il y a une saillie (22) prévue dans l'extrémité de la seconde tige de raccordement (19), ledit trou fendu définissant une butée finale (24) pour la saillie (22) de la seconde tige de raccordement (19) qui arrête le mouvement relatif de la première tige de raccordement (18).

6. Mallette de stockage selon la revendication 1, dans laquelle le mécanisme d'ouverture et de fermeture du couvercle (4) de la mallette de stockage (2) comprend un levier (10) facultativement raccordé à un élément de retenue (12) de couvercle (4) et agencé pour interagir avec la poignée (7).

7. Mallette de stockage selon la revendication 6, dans laquelle ledit levier (10) comprend au moins un élément de verrouillage (15) prévu pour être logé dans une cavité (16) de la poignée (7), pour permettre le verrouillage du mécanisme d'ouverture et de fermeture du couvercle (4) lorsque ladite poignée (7) est dans une position rétractée et ledit levier (10) dans une position de fermeture du couvercle (4).

8. Mallette de stockage selon les revendications 6 ou 7, dans laquelle le levier (10) du mécanisme d'ouverture et de fermeture du couvercle (4) est monté de manière articulée pour tourner par rapport à un arbre coaxial (11) de la poignée.

9. Mallette de stockage selon la revendication 2, dans laquelle lesdits moyens pour verrouiller l'actionnement du mécanisme de fermeture et d'ouverture du couvercle (4) comprennent au moins une tige de raccordement (18, 19) du mécanisme d'actionnement de poignée (7) prévue pour entrer en contact avec le levier (10) du mécanisme d'ouverture et de fermeture.

10. Mallette de stockage selon la revendication 2, dans laquelle ledit piston de déverrouillage (29) est monté dans une serrure pour empêcher l'actionnement lorsque l'utilisateur verrouille la serrure avec une clé.

11. Mallette de stockage selon la revendication 2, dans laquelle ladite poignée (7) comprend un ressort (17) agencé de manière coaxiale par rapport à l'arbre (11) de rotation de la poignée (7), dans laquelle ledit ressort (17) a accumulé l'énergie potentielle pour déplacer ladite poignée (7) de la position rétractée à la position intermédiaire étendue lorsque la poignée (7) est libérée par la languette de retenue (32) du mécanisme d'actionnement de poignée (7).

12. Mallette de stockage selon la revendication 1, dans laquelle le mécanisme d'ouverture et de fermeture du couvercle (4), l'élément de fixation (6) de la mallette de stockage (2) au châssis de la motocyclette, la poignée (7), le mécanisme d'actionnement de la poignée (7) qui permet à l'élément de fixation (6) de la mallette de stockage (2) d'être actionné et les moyens de verrouillage du mécanisme d'ouverture et de fermeture du couvercle (4) sont montés sur une base de support (8) intégrée dans une cavité (9) de la mallette de stockage (2).
